# EUROPEAN PATENT SPECIFICATION

(11) **EP 2 958 206 B1**
(45) Date of publication and mention of the grant of the patent: **09.09.2020**
(21) Application number: 15171542.2
(22) Date of filing: 10.06.2015
(51) Int. Cl.: H02G 3/12

(54) **SYSTEM FOR ANCHORING ELECTRICAL ELEMENTS OR THE LIKE IN INSTALLATION DUCTS**
SYSTEM ZUR VERANKERUNG ELEKTRISCHER ELEMENTE ODER DERGLEICHEN IN INSTALLATIONSKANÄLEN
SYSTÈME D'ANCRAGE D'ÉLÉMENTS ÉLECTRIQUES OU SIMILAIRES DANS DES CONDUITS D'INSTALLATION

(30) Priority: 16.06.2014 ES 201430916
(43) Date of publication of application: 23.12.2015
(73) Proprietor: Schneider Electric España, S.A., 08019 Barcelona (ES)
(72) Inventor: SUESCUN ORRILLO, Cesar, 31180 Zizur Mayor (Navarra) (ES); BARRIO GOÑI, Juan Pedro, 31172 Eguillor de Ollo (Navarra) (ES); GONZÁLES IRIBAS, Aitor, 31610 Villava (Navarra) (ES); REBOLÉ OLLETA, José Antonio, 31006 Pamplona (Navarra) (ES)
(74) Representative: Plasseraud IP

(56) References cited:
- EP-A1- 2 079 138
- DE-A1- 4 111 285
- DE-A1- 4 120 939
- DE-U1- 20 001 343

## Description

### Field of the Art

The present invention relates to the assembly for the installation of electrical elements or the like in ducts, proposing an anchoring which allows establishing the assembly for the installation of electrical elements or the like particularly configured with secured retention which makes disassembly by pulling from the front very difficult, but allows quick disassembly by means of tilting the electrical element or the like to be disassembled.

### State of the Art

The assembly for the installation of elements making up electric installations or the like, such as socket outlets, fuse holders, telephone or network connectors, etc., in ducts through which wiring of the corresponding installations is laid in an organized and concealed manner is known.

In that assembly, said electrical elements or the like are fastened in the installation ducts by means of interlocking the electrical elements or the like in a front groove of the ducts, establishing a retention clipping with respect to the edges of the front groove of the ducts by means of teeth formations which the electrical elements or the like have on their sides.

A simple and quick assembly for the installation of the electrical elements or the like is thereby achieved, since it is only necessary to place said electrical elements or the like in the front groove of the ducts and to press same until the retention clipping is established, determining the fastening of the assembly.

However, with conventional clipping solutions, said fastening of the assembly for the installation of electrical elements or the like in the ducts of application does not offer effective security against unforeseen or accidental disassembly since due to the flexibility of the walls of the ducts, when an installed electrical element or the like is suddenly pulled on, separation of the edges of the front groove of the corresponding duct occurs due to bending of the walls thereof, the electrical element or the like being uncoupled from its assembly for installation.

Therefore, for example, if due to accidental tripping, or any other cause, an external cable connected to an electrical element or the like installed in a duct is suddenly pulled on, the pull can cause disassembly of the electrical element or the like from its coupling in the duct and as a result, possible disconnection from the electric cables of the installation, with the possibility of breaks and short-circuiting.

To deal with that problem, in order to strengthen the installation, secondary duct closure elements independent of the electrical elements or the like that are installed are provided in some cases, with which secondary closure elements retention is established between the side walls of the ducts to prevent separation.

The examples of the prior art can be found in the following documents: DE4111285A1, DE20001343U1, EP2079138A1 or DE4120939A1.

### Object of the Invention

The invention proposes an anchoring for fastening particularly configured electrical elements or the like in installation ducts, whereby determining a retention which makes disassembling said electrical elements or the like by pulling on them to extract same very difficult, allowing, however, quick disassembly by means of specific manipulation to that end.

This anchoring object of the invention comprises an interlocking by means of particular formations in the form of teeth defined as flexible pins which the electrical elements or the like have on their sides, whereby establishing a retention coupling with locking with respect to the edges of the groove for coupling in the installation ducts, backward-oriented tabs furthermore being envisaged on the same sides of the electrical elements or the like, with which insertion interlocking is also established in a forward-oriented fold of the edges of the groove of the ducts. An anchoring is thus obtained which, on one hand, determines a secure retention coupling in the direction for front extraction of the installed electrical elements or the like with respect to the assembly ducts, on the other hand, the actual installed electrical elements or the like establishing a transverse retention of the edges of the groove of the ducts, which makes it very difficult for the walls of the ducts to give way due to bending when the groove opens due to the front pulling force applied on the installed electrical elements or the like, which thereby prevents being able to cause the disassembly of same by said pulling.

The formations in the form of teeth of the electrical elements or the like to be installed, with which a front retention coupling of the assembly is established, have a forwardly-inclining face that comes to a point determining a harpoon shape, with which the retention coupling establishes a locking that prevents the release of the retention in a more secure manner against front forces.

Furthermore, said formations in the form of teeth with which retention of the electrical elements or the like in the assembly for installation in ducts is established are defined as pins which are attached at one end to the wall of the corresponding electrical element or the like, but which are free on the sides as result of separation grooves, which causes said pins to have a high freedom of bending, thereby enhancing the locking of the retention.

On the other hand, the tabs of the electrical elements or the like which establish coupling with respect to the folds of the edges of the assembly ducts have a chamfer in the inner part of the end edge. This results in an anchoring of the assembly of the electrical elements or the like which allows disassembly by means of forcefully tilting the electrical element or the like to be disassembled to the side, since the tilting force frees the front retention coupling and side retention coupling of a side of the assembly, which allows extracting the electrical element or the like.

As a result, the proposed anchoring has features making it advantageous, acquiring its own identity and preferred character for its intended application function, without having to resort to supplementary accessories.

### Description of the Drawings

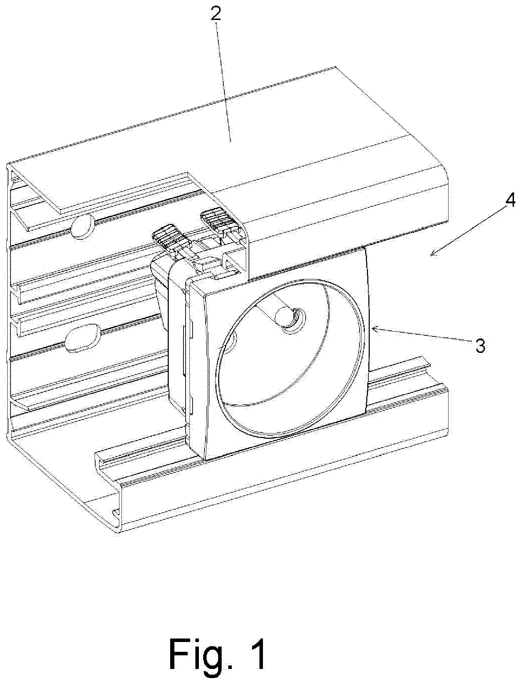

Figure 1 shows a perspective view of a conventional assembly of a current electrical element or the like in an installation duct, an electric socket being depicted by way of example, without it excluding the application with other electrical elements or the like.

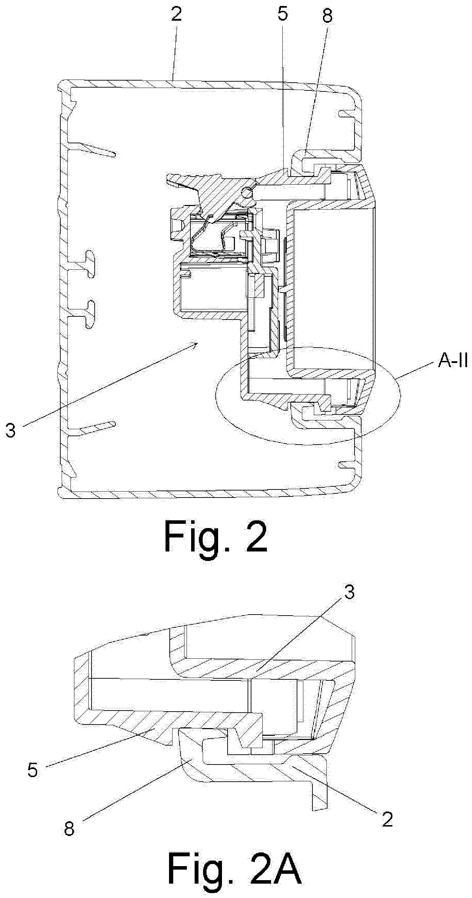

Figure 2 is a cross-section view of the assembly of the preceding figure.
Figure 2A is an enlarged detail view of area A-II indicated in the preceding figure.
Figure 3 is a section such as that of Figure 2, the forces experienced by the coupling formations for the retention of the assembly when a front pulling force is applied on the current electrical element or the like being indicated with arrows on one of the sides.
Figure 3A is an enlarged detail view of area A-III indicated in the preceding figure.

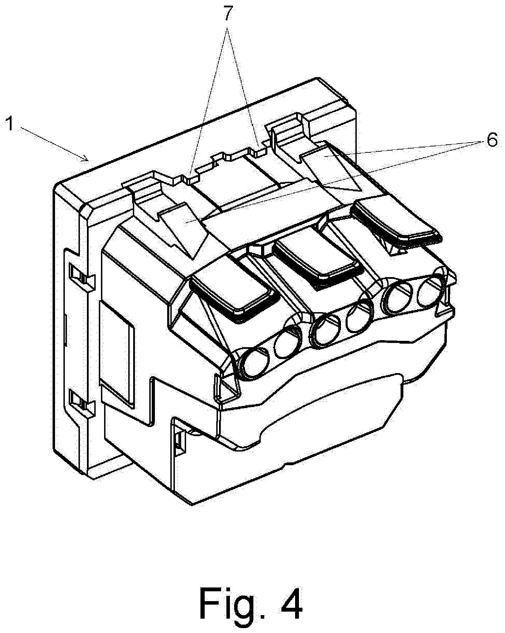

Figure 4 is a rear perspective view of an electrical element or the like particularly configured for establishing fastening thereof so that it is assembled in ducts according to the invention.

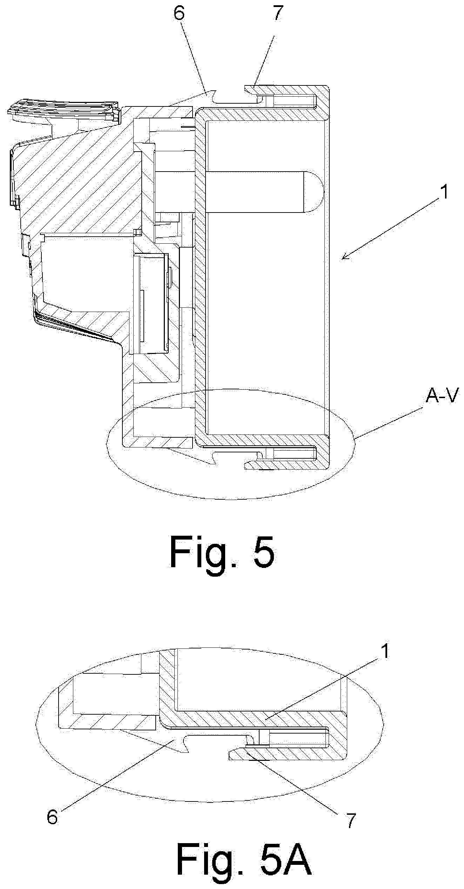

Figure 5 is a sectioned side view of the electrical element or the like of the preceding figure.
Figure 5A is an enlarged detail view of area A-V indicated in the preceding figure.

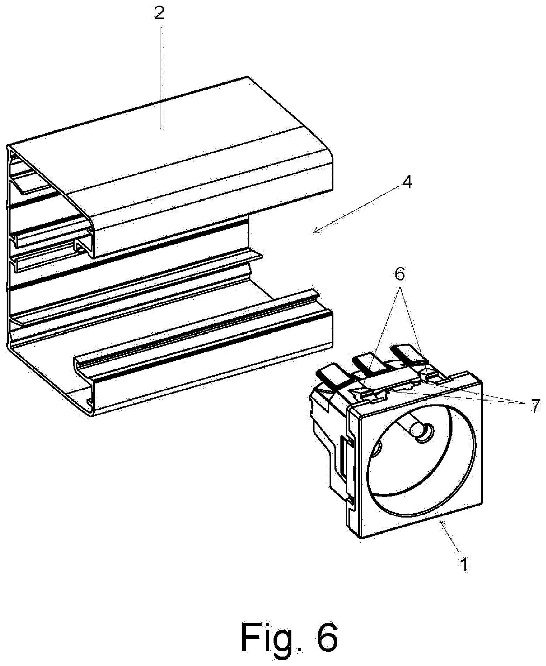

Figure 6 is an exploded perspective view of the assembly of said electrical element or the like of Figures 4 and 5, with respect to an installation duct.
Figure 7 is a cross-section view of the assembly of the preceding figure assembled.
Figure 7A is an enlarged detail view of area A-VII indicated in the preceding figure.
Figure 8 is a section of the assembly of an electrical element or the like particularly configured according to the invention in an installation duct, with the retention couplings of the assembly of the electrical element or the like forced but maintaining retention against a force in the direction for front extraction.
Figure 8A is an enlarged detail view of area A-VIII of the preceding figure.
Figure 9 is a section of the assembly of an electrical element or the like particularly configured according to the invention in an installation duct, with the retention couplings of the assembly of one of the sides uncoupled as a result of a tilting force forced on the electrical element or the like for disassembling same.
Figure 9A is an enlarged detail view of area A-IX of the preceding figure.

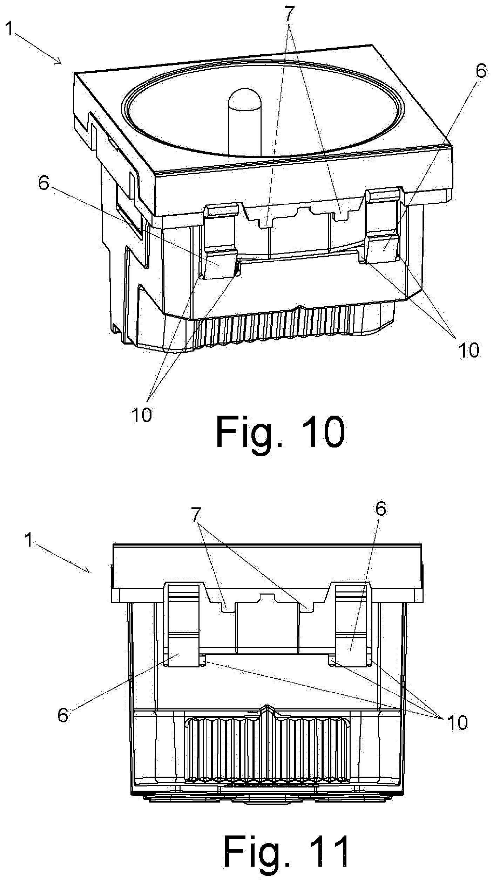

Figures 10 and 11 are, respectively, a perspective view and a front view of an electrical element or the like particularly configured according to the invention, the side grooves conferring flexibility to the pins with teeth for the retention coupling of the assembly of said electrical element or the like in an installation duct being observed.

### Detailed Description of the Invention

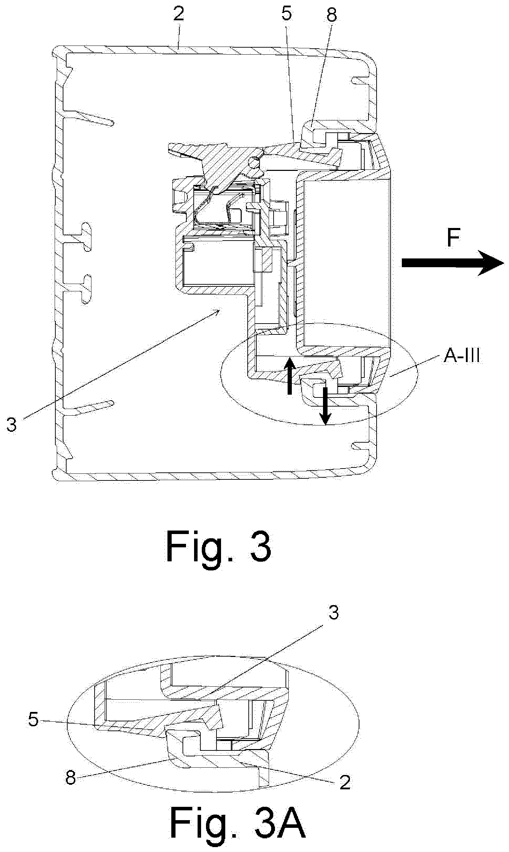

The object of the invention relates to an anchoring for fastening the assembly of electrical elements or the like (1) particularly configured to that end in installation ducts (2), with features that allow overcoming the drawbacks of current solutions for fastening conventional electrical elements or the like (3), establishing a front retention of the assembly with respect to the edges of the interlocking groove (4) in the installation ducts (2) by means of formations (5) in the form of teeth, the retention of which, however, is not effective when pulling (F) on the conventional electrical element or the like (3) occurs in the direction of extraction, as indicated in Figure 3, since the walls of the duct (2) can be separated by bending due to the pulling force (F), causing the uncoupling of the assembly.

The particularly configured electrical elements or the like (1) intended for being installed in ducts (2) according to the invention have on the sides formations (6) in the form of teeth with particular features for establishing a front retention coupling in the assembly for installation, furthermore having backward-oriented tabs (7) on the same sides.

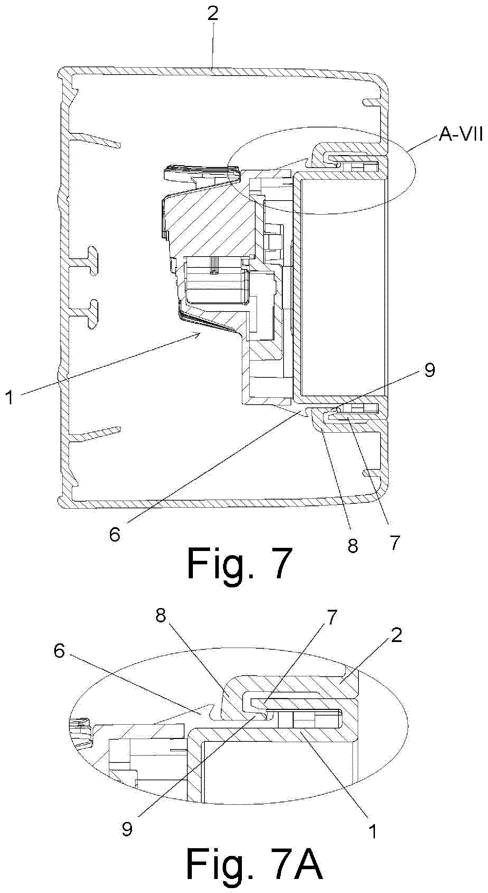

Therefore, when in the assembly of application said particularly configured electrical elements or the like (1) are interlocked in the groove (4) of an installation duct (2), the formations (6) in the form of teeth of said electrical elements or the like (1) establish coupling behind the edges (8) of the groove (4) of the duct (2), determining a front retention against disassembly, as seen in Figures 7 and 7A.

However, the backward-oriented tabs (7) in turn are interlocked in a gap determined by a forward-oriented fold (9) which the edges (8) of the groove (4) of the installation duct (2) have, such that said interlocking establishes a transverse retention of the edges (8) of the groove (4) of the duct (2), preventing those edges (8) from being able to separate from one another due to bending of the side walls of the duct (2), the actual electrical element or the like (1) thereby maintaining the width of the groove (4) of the duct (2), and accordingly, the retention of the assembly in the installation, making disassembly by pulling very difficult.

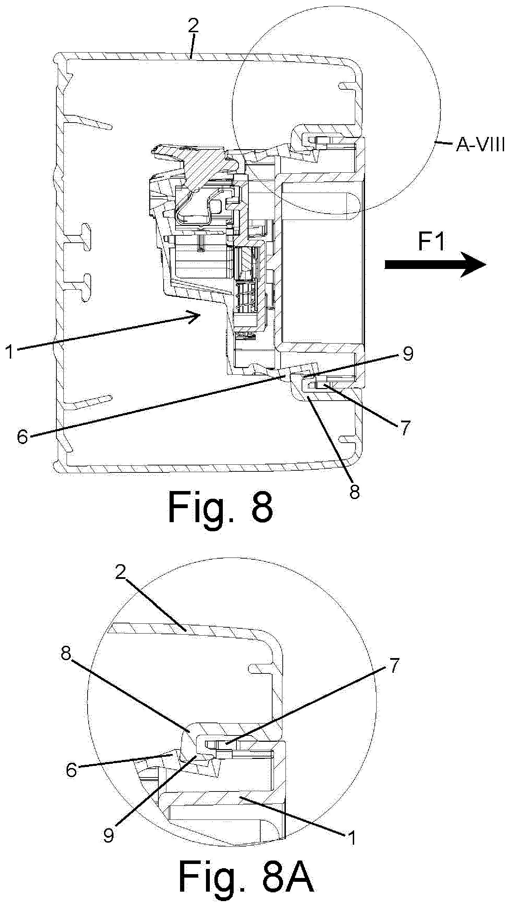

According to the invention, the formations (6) in the form of teeth establishing the front retention of the assembly of the electrical elements or the like (1) have a configuration with a forwardly-inclining face that comes to a point determining a harpoon shape, such that in the limit of coupling against the edges (8) of the groove (4) of the installation duct (2), said formations (6) in the form of teeth lock onto the mentioned edges (8) of the groove (4) of the duct (2). Therefore, if the electrical element or the like (1) is pulled (F1) in the direction of front extraction, as indicated in Figure 8, the formations (6) in the form of teeth perform locking and maintain the coupling with respect to the edges (8) of the duct (2), as seen in detail in Figure 8A, preventing the electrical element or the like (1) from coming out of the coupling of its assembly for installation.

Furthermore, according to the invention said formations (6) in the form of teeth are defined as pins which are attached at one end to the corresponding wall of the electrical element or the like (1), there being on both sides of said pins grooves (10) laterally separating them from of the wall of the electrical element or the like (1), which confers those pins a high flexibility favoring the locking of the retention of the electrical element or the like (1) in the assembly.

On the other hand, the tabs (7) establishing side retention to prevent the walls of the installation duct (2) from bending outwardly have a chamfer (11) in the inner part of the end edge.

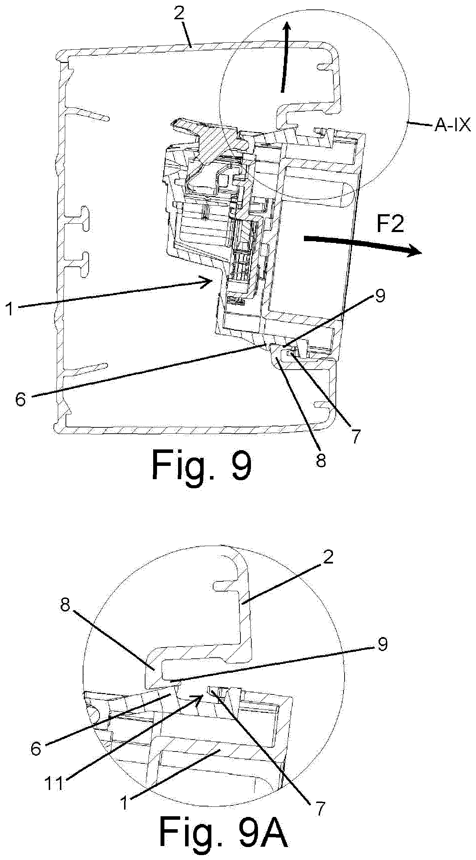

By applying a tilting force (F2) forced on the electrical element or the like (1), as indicated in Figure 9, the formations (6) for front retention of one side of the electrical element or the like (1) are uncoupled from the corresponding edge (8) of the duct (2), while the fold (9) of the edge (8) of the duct (2) is uncoupled from the tab (7), this uncoupling being favored by the chamfer (11) of the tab (7), whereby one of the sides of the electrical element or the like (1) is free of retention, as seen in Figure 9A, being able to be extracted from its assembly in the installation duct (2).

## Claims

1. A system for anchoring electrical elements or the like in installation ducts, comprising an electrical element or the like and an installation duct, the electrical elements or the like (1) to be installed comprising side formations (6) in the form of teeth, with which they establish a front retention coupling with respect to the edges (8) of an insertion groove (4) in the installation ducts (2), and tabs (7) on the same sides for establishing a transverse retention interlocking with respect to the edges (8) of the insertion groove (4) in the installation duct (2),
the formations (6) in the form of teeth are defined as pins which are attached at one end to the corresponding wall of the electrical element or the like (1) and are separated on both sides from said wall of the electrical element or the like (1) by grooves (10) which make bending easier, **characterized in that**
said formations (6) in the form of teeth having a forwardly-inclining face that comes to a point determining a harpoon shape which establishes retention locking in the coupling to the corresponding edge (8) of the groove (4) of the installation duct (2); and wherein
the tabs (7) have in an inner part of their end edge a chamfer (11) which favors uncoupling from the corresponding edge (8) of the groove (4) of the duct (2) by a tilting force forced on the electrical element or the like (1) for disassembling same.

## Patentansprüche

1. System zur Verankerung elektrischer Elemente oder dergleichen in Installationskanälen, das ein elektrisches Element oder dergleichen und einen Installationskanal aufweist, wobei die elektrischen Elemente oder dergleichen (1), die installiert werden sollen, aufweisen: Seitenformationen (6) in der Form von Zähnen, mit denen sie eine vordere Haltekopplung in Bezug auf die Ränder (8) einer Einsatznut (4) in den Installationskanälen (2) herstellen, und Nasen (7) auf den gleichen Seiten zur Herstellung eines Ineinandergreifens zum Festhalten in der Querrichtung in Bezug auf die Ränder (8) der Einsatznut (4) in dem Installationskanal (2),
wobei die Formationen (6) in der Form von Zähnen als Stifte definiert sind, die an einem Ende der entsprechenden Wand des elektrischen Elements oder dergleichen (1) befestigt sind und auf beiden Seiten von der Wand des elektrischen Elements oder dergleichen (1) durch Nuten (10), die das Biegen erleichtern, getrennt sind, **dadurch gekennzeichnet, dass**
die Formationen (6) in der Form von Zähnen eine nach vorn geneigte Fläche haben, die zu einem Punkt kommt, der eine Harpunenform bestimmt, die eine Haltesperrung in der Kopplung mit dem entsprechenden Rand (8) der Nut (4) des Installationskanals (2) herstellt; und wobei
die Nasen (7) in einem inneren Teil ihres Endrands eine Anschrägung (11) haben, die das Entkoppeln von dem entsprechenden Rand (8) der Nut (4) des Kanals (2) durch eine Kippkraft begünstigt, die dem elektrischen Element oder dergleichen (1) aufgezwungen wird, um dieses zu demontieren.

## Revendications

1. Système pour ancrer des éléments électriques ou analogues dans des conduits d'installation, comprenant un élément électrique ou analogue et un conduit d'installation, les éléments électriques ou analogues (1) à installer comprenant des formations (6) latérales en forme de dents, avec lesquelles ils établissent un couplage de retenue avant par rapport aux bords (8) d'une rainure (4) d'insertion dans les conduits (2) d'installation, et des languettes (7) sur les mêmes côtés pour établir un emboîtement de retenue transversal par rapport aux bords (8) de la rainure (4) d'insertion dans le conduit (2) d'installation,
les formations (6) en forme de dents sont définies comme des broches qui sont fixées, au niveau d'une extrémité, à la paroi correspondante de l'élément électrique ou analogue (1) et sont séparées sur les deux côtés de ladite paroi de l'élément électrique ou analogue (1) par des rainures (10) qui facilitent la flexion, **caractérisé en ce que**
lesdites formations (6) en forme de dents ont une face inclinée vers l'avant qui arrive à un point déterminant une forme de harpon qui établit un verrouillage de retenue dans le couplage au bord (8) correspondant de la rainure (4) du conduit (2) d'installation ; et dans lequel
les languettes (7) ont, dans une partie intérieure de leur bord d'extrémité, un chanfrein (11) qui favorise le découplage du bord (8) correspondant de la rainure (4) du conduit (2) par une force de basculement exercée sur l'élément électrique ou analogue (1) pour son démontage.
